## Europäisches Patentamt
## European Patent Office
## Office européen des brevets

(19)

(11) Veröffentlichungsnummer: **0 075 057 B1**

(12)

# EUROPÄISCHE PATENTSCHRIFT

(45) Veröffentlichungstag der Patentschrift:
29.01.86

(21) Anmeldenummer: 81710046.4

(22) Anmeldetag: 18.09.81

(51) Int. Cl.⁴: **B 65 H 29/68,** B 23 D 36/00,
F 16 H 35/02

(54) **Einrichtung zum Antrieb einer Ablegeeinrichtung für Bogen.**

(43) Veröffentlichungstag der Anmeldung:
**30.03.83 Patentblatt 83/13**

(45) Bekanntmachung des Hinweises auf die Patenterteilung:
**29.01.86 Patentblatt 86/5**

(84) Benannte Vertragsstaaten:
**BE CH DE FR GB IT LI NL**

(56) Entgegenhaltungen:
**DE - A - 2 415 778
DE - A - 2 906 423
DE - B - 1 411 922
DE - C - 400 477
US - A - 3 817 122**

(73) Patentinhaber: **Maschinenfabrik GOEBEL GmbH,
Postfach 4022 Goebelstrasse 21,
D-6100 Darmstadt 1 (DE)**

(72) Erfinder: **Weber, Friedrich, Kilsbacher Strasse 17,
D-6101 Brensbach (DE)**

EP 0 075 057 B1

## Beschreibung

Die vorgeschlagene Einrichtung bezieht sich auf den Antrieb einer mit einer Bahnen oder Bogen be- oder verarbeitenden Maschine verbundenen Ablegeeinrichtung für die be- oder verarbeiteten, aus Papier, Folie, Geweben, Metallen o. dgl. bestehenden Bogen mit einem mit einem gleichförmigen und einem ungleichförmigen Antrieb versehenen Planetengetriebe bestehend aus Aussensonne, Steg, Planetrad und Innensonne, wobei der gleichförmige Antrieb mit der Aussensonne, der ungleichförmige Antrieb mit dem Steg und der ungleichförmige Abtrieb bestehend aus der Innensonne mit einer die abzulegenden Bogen ergreifenden und diese verlangsamenden Ablegeeinrichtung verbunden ist.

Einrichtungen der genannten Art sind beispielsweise aufgrund der DE-PS 400 477 bekannt. Sie legen aus Papier, Folie, Geweben, Metallen o. dgl. bestehende Bogen ab, nachdem diese Bogen in irgendeiner Weise be- oder verarbeitet wurden. Diese Be- oder Verarbeitung konnte z.B. dadurch geschehen, dass die Bogen Druckmaschinen durchliefen, in welchen sie mit einem Aufdruck versehen wurden. Die Bogen können aber auch dadurch entstanden sein, dass eine endlose Bahn in einer Druckmaschine beispielsweise bedruckt oder gestanzt wurde und diese Bahn nach dem Druck- bzw. Stanzvorgang durch einen Querschneider o. dgl. in einzelne Bogen zerschnitten wurde.

Während des Be- oder Verarbeitungsvorganges werden die Bogen oder Bahnen mit der Laufgeschwindigkeit der Be- oder Verarbeitungsmaschinen, z.B. einer Druckmaschine, durch diese Maschinen hindurch befördert. Nachdem die Bogen in erwünschter Weise be- oder verarbeitet, wie z.B. gedruckt oder gestanzt wurden, werden die Bogen in einen Kasten o. dgl. abgelegt. Beim Ablegen stossen die Bogen zwangsläufig an diesen Kasten an, wodurch auf die Kanten der Bogen Kräfte ausgeübt werden. Da die Laufgeschwindigkeiten der Be- oder Verarbeitungsmaschinen in der Regel beträchtlich sind, würden die Kanten der Bogen in unerwünschter Weise beschädigt werden, wenn man die Bogen mit der vollen Laufgeschwindigkeit der Be- oder Verarbeitungsmaschine, wie z.B. einer Druckmaschine oder einem Querschneider, ablegen würde. Man ist deshalb dazu übergegangen, mehrere Bogen im Anschluss an die Be- oder Verarbeitung auf einem Sammelzylinder zu sammeln, um sie danach gemeinsam an eine umlaufende Kette abzugeben. An dieser Kette sind ein oder mehrere Greifer o. dgl. befestigt, welche die Bogen ergreifen und während des eigentlichen Ablegevorganges festhalten bis die Bogen an der Ablagestelle angelangt sind. Die Ketten werden ihrerseits durch einen diskontinuierlichen Antrieb angetrieben, wodurch es ermöglicht wird, dass die Ketten das jeweils aus mehreren Bogen bestehende Paket mit der Laufgeschwindigkeit des Sammelzylinders von diesem abnehmen, anschliessend verzögern auf beispielsweise ein Fünftel der Laufgeschwindigkeit, wenn fünf Bogen gesammelt worden sind, um die Bogen danach mit langsamer Geschwindigkeit in den Kasten o. dgl. abzulegen. Anschliessend wird die Kette einschliesslich der daran befestigten Greifer wieder beschleunigt, um ein folgendes Bogenpaket von dem Sammelzylinder abnehmen zu können.

Das diskontinuierliche Umlaufen der Ketten bzw. der an den Ketten befestigten Greifeinrichtungen, der Kettenführungseinrichtungen usw. bedeutet, dass relativ grosse Massen während eines Umlaufes der Kette beschleunigt oder verzögert werden müssen. Dies hat recht beträchtliche Massenkräfte zur Folge, welche naturgemäss auf den Antrieb zurückwirken. Dieser Antrieb ist aus Kostengründen in der Regel mechanisch mit dem Antrieb der übrigen Maschine, wie beispielsweise einer Druckmaschine oder einem Querschneider, verbunden. Aufgrund der diskontinuierlichen Arbeitsweise der Ablegeeinrichtung ergeben sich somit diskontinuierliche, auf den Antrieb der gesamten Maschine rückwirkende Massenkräfte, welche die Arbeitsweise der der Ablegeeinrichtung vorgeschalteten Be- oder Verarbeitungsmaschine und damit die Qualität der hergestellten Produkte oftmals in unerwünschter Weise beeinträchtigen.

Um hier Abhilfe zu schaffen, ist es denkbar, die Antriebe für die Be- oder Verarbeitungsmaschine und die Ablageeinrichtung voneinander zu trennen. Dies bedeutet aber aufgrund des geforderten Ablaufvorganges der gesamten Einrichtung, dass beide Antriebe miteinander synchronisiert werden müssen. Es ist zwar denkbar, dass diese Synchronisation auf elektrischem oder elektronischem Wege erfolgen könnte, jedoch ist dies preislich meist ungünstiger als eine mechanische Verbindung.

Die Kompensation diskontinuierlicher Massenkräfte durch Gegensteuerung entsprechender Schwungmassen ist zwar an sich, z. B. aus der DE-AS 26 57 861, der US-PS 22 11 418 oder der BE-PS 544 329 bekannt. Die hier beschriebenen Getriebe benötigen jedoch sehr viel Raum, so dass sie für den Antrieb eines Bogenablagesystems nicht geeignet sind. Das daneben aus der DE-OS 29 06 423 bekannte Getriebe ist für die Erfordernisse eines Antriebes für die Übergabetrommel an einem Falzapparat mit einem spezialisierten Kurbelgetriebe ausgestattet, welches ebenfalls so viel Raum beansprucht, dass es für den Antrieb eines Bogenablagesystems nicht verwendet werden kann.

Es besteht daher die Aufgabe, einen preisgünstigen und kompakten Antrieb mit Kompensation ungleichförmig bewegter Massen vorzuschlagen, der für die Erfordernisse eines Bogenablagesystems geeignet ist.

Diese Aufgabe wird gelöst durch ein aus Bandleitungen bestehendes Leit- und Ablagesystem für die Bogen und ein aus zwei Planetengetrieben bestehendes Verbundgetriebe, bei dem die Stege der beiden Planetengetriebe miteinander verbunden sind, wobei die Aussensonne des zweiten Planetengetriebes zur Aussensonne des ersten Planetengetriebes gegensinnig umläuft und die Innensonne des zweiten Planetengetriebes mit einer Schwungscheibe verbunden ist. Dabei können die Stege der beiden Planetengetriebe aus einem beiden Planetengetrieben gemeinsamen Bauteil bestehen.

Durch die vorgeschlagene Lösung wird es ermöglicht, dass die gesamte maschinelle, aus Be- oder Verarbeitungsmaschine und Ablageeinrichtung bestehende Gesamteinrichtung mit höherer Laufgeschwindigkeit als bisher arbeiten kann. Das bedeutet, dass die Produktivität der Gesamteinrichtung entsprechend zunimmt.

Anhand eines in den beigefügten Figuren schematisch abgebildeten, den Erfindungsgedanken nicht begrenzenden Ausführungsbeispiels wird die vorgeschlagene Einrichtung näher erläutert. In den Figuren sind im vorliegenden Zusammenhang nicht wesentliche, dem Fachmann hinreichend bekannte Maschinenteile wegen einer übersichtlicheren Darstellungsweise nicht gezeichnet. In den Figuren sind vielmehr nur diejenigen Teile gezeichnet, die zur näheren Erläuterung erforderlich sind.

Die einzelnen Figuren bedeuten:

Fig. 1: Seitenanschicht der Bandführung

Fig. 2: Auseinandergezogene schnittbildliche Darstellung des zugehörigen Getriebes

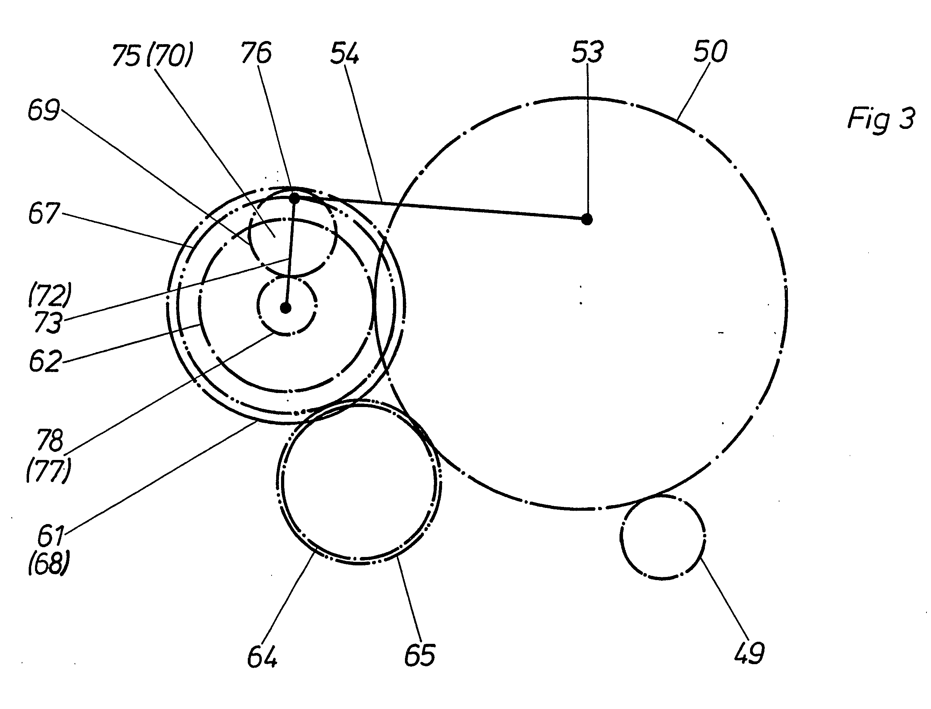

Fig. 3: Symbole seitlicher Darstellung des Getriebes, in welcher das erste Planetengetriebe und sein Antrieb strichpunktiert, Teile des zweiten Planetengetriebes mit Strich und doppeltem Punkt und der diskontinuierliche Antrieb in ausgezogenen Linien dargestellt sind.

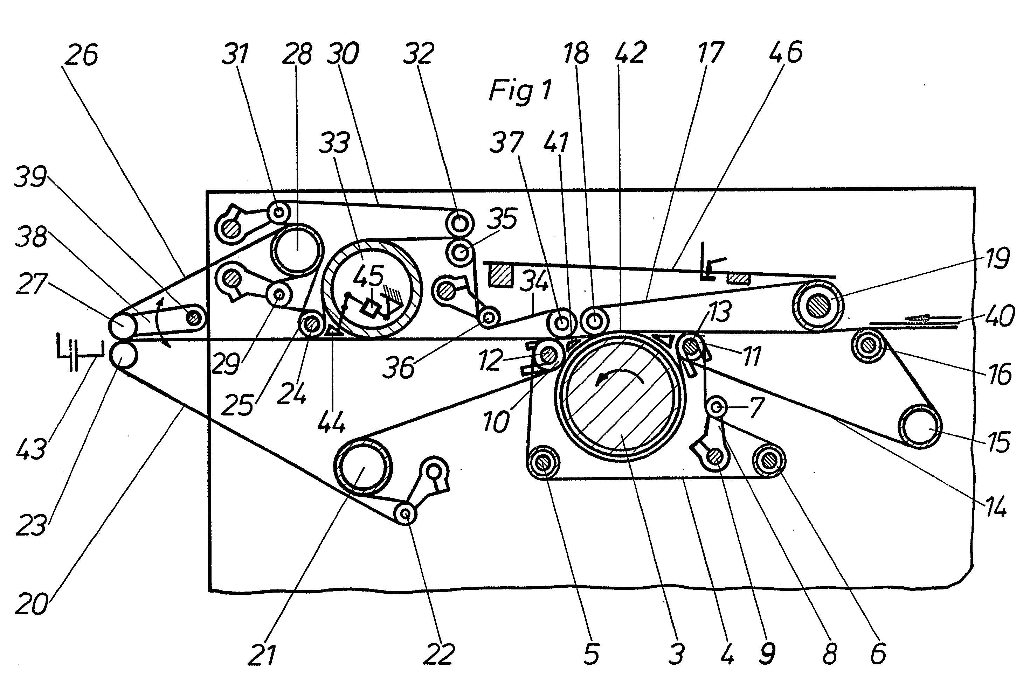

In dem die Seitenwände 1 und 2 enthaltenden Gestell der Maschine ist ein Sammelzylinder 3 drehbar gelagert. Um den Sammelzylinder 3 herum, der zur Dämpfung von Drehmomentschwankungen mit einem dickwandigen Zylindermantel versehen oder aus vollem Material hergestellt sein kann, ist eine aus mehreren nebeneinander angeordneten schmalen Bändern bestehende erste Bandleitung 4 angeordnet. Diese Bandleitung umschlingt auch die Walzen 5 und 6 sowie die Spannwalze 7, welche mittels Hebelarm 8 um eine Traverse 9 verschwenkt werden kann. Die Traverse 9 ist zwischen den Seitenwänden 1 und 2 in bekannter Weise befestigt. Die erste Bandleitung 4 umschlingt ferner radartige Scheiben 10 und 11. Jede dieser radartigen Scheiben entspricht der Breite des entsprechenden Bandes der ersten Bandleitung 4. Die Scheiben 10 und 11 sind drehbar an mit dem Maschinengestell ortsfest verbundenen Traversen 12 und 13 gelagert. Die erste Bandleitung 4 umschlingt somit den Sammelzylinder 3, die Walzen 5 und 6 sowie die Spannwalze 7 und die Scheiben 10 und 11. Dabei ist es für den Fachmann selbstverständlich, dass die Bandleitung 4 aus mehreren schmalen, in Blickrichtung der Fig. 1 hintereinander angeordneten, in axialer Richtung des Sammelzylinders 3 über dessen Breite verteilten Bändern besteht. Diese Bänder halten untereinander einen gewissen gegenseitigen Abstand ein, welcher so gross ist, dass andere schmale Bänder einer anderen Bandleitung zwischen die Bänder der ersten Bandleitung eingreifen können.

Beispielsweise sind an der Traverse 13 mehrere Scheiben 11 in axialer Richtung in Blickrichtung der Fig. 1 hintereinander derart angeordnet, dass diese Scheiben in Blickrichtung der Fig. 1 abwechselnd von Bändern umschlungen werden, die der ersten Bandleitung 4 oder der zweiten Bandleitung 14 zuzuordnen sind. In Blickrichtung der Fig. 1 gesehen schliesst sich hinter einem Band der Bandleitung 14 wieder ein Band der Bandleitung 4 an, welches ebenfalls um eine an der Traverse 13 drehbar befestigten Scheibe 11 geschlungen ist.

Die zweite Bandleitung 14 ist ferner um die Walzen 15 und 16 geschlungen. Auch diese Bandleitung ist wie alle anderen Bandleitungen aus einzelnen schmalen Bändern zusammengesetzt.

Eine dritte Bandleitung 17 umschlingt die Walzen 18 und 19. Eine vierte Bandleitung 20 umschlingt die Walze 21, die Spannwalze 22, die Walze 23 und einige der auf der Traverse 12 befindlichen radartigen Scheiben 10.

Auf die gleiche Weise wie die Traverse 12 ist eine Traverse 24 in den Seitenwänden 1 und 2 gelagert. Auf dieser Traverse sind ebenfalls radartige Scheiben 25 drehbar gelagert, wobei in Blickrichtung der Fig. 1 mehrere radartige Scheiben 25 hintereinander angeordnet sind. Diese Scheiben sind abwechselnd jeweils einer von zwei weiteren Bandleitungen zugeordnet. Die fünfte Bandleitung 26 umschlingt einige der radartigen Scheiben 25 sowie die Walze 27, die Walze 28 und die Spannwalze 29.

Eine sechste Bandleitung 30 umschlingt ebenfalls einige der radartigen Scheiben 25, die Walze 28 ebenfalls, die Spannwalze 31, die Walze 32 und den Umkehrzylinder 33. Eine siebente Bandleitung 34 umschlingt schliesslich ebenfalls den Umkehrzylinder 33 sowie die Walze 35, die Spannwalze 36 und die Walze 37.

Der Sammelzylinder 3 sowie die erste Bandleitung 4, die zweite Bandleitung 14 und die dritte Bandleitung 17 sind vom Hauptantrieb der Maschine her mit kontinuierlicher Geschwindigkeit angetrieben. Die Walze 21 hingegen wird diskontinuierlich angetrieben, woraus sich ergibt, dass die vierte Bandleitung 20 diskontinuierlich umläuft. Die fünfte Bandleitung 26, die sechste Bandleitung 30 und die siebente Bandleitung 34 laufen ebenfalls diskontinuierlich um, da der Umkehrzylinder 33 und Walze 28 über einen Zahnriemen o. dgl. antriebsmässig mit der Walze 21 verbunden sind und die Bandleitungen 26 und 30 entweder mit der vierten Bandleitung 20 durch direkten Kontakt oder indirekt durch Zwischenschaltung eines abzulegenden Paketes von Bogen in Berührung stehen können. Dies ist beispielsweise daran zu erkennen, dass die Walze 27 mittels Hebelarm 38 um eine Traverse 39 verschwenkt werden kann. Sofern die einzelnen Bänder der vierten Bandleitung 20 und der fünften Bandleitung 26 in der gleichen Ebene angeordnet sein sollten, kommt damit jeweils das untere Trum jedes einzelnen Bandes der fünften Bandleitung 26 auf einen Teil des oberen Trums der einzelnen Bänder der vierten Bandleitung 20 zu liegen. Es ist jedoch auch möglich, dass die einzelnen Bänder der vierten Bandleitung 20 in einer anderen Ebene liegen als die einzelnen Bänder der fünften Bandleitung 26. Auf diese Weise wird das Paket der zwischen den Bändern liegenden abzulegenden Bogen in eine Wellenform gedrückt und damit versteift. Es dient gleichzeitig als Kupplungsmittel zwischen den einzelnen Bändern der jeweiligen Bandleitungen.

Die Funktionsweise der Einrichtung ist derart, dass in Fig. 1 von rechts her in Pfeilrichtung kommend Bogen 40 auf das obere Trum der einzelnen Bänder der zweiten Bandleitung 14 auflaufen. Die Bogen werden in ihrem weiteren Verlauf von dem unteren Trum der einzelnen Bänder der dritten Bandleitung 17 von oben her erfasst und laufen somit nach links in Richtung auf den Sammelzylinder 3.

Sofern die einzelnen Finger 41 einer auf der Traverse 12 ebenfalls drehbar befestigten Weiche, wie in Fig. 1 gezeigt, schräg nach oben gestellt sind, werden die Bogen 40 von der Unterseite der Finger 41 gegen den Umfang des Sammelzylinders 3 gedrückt und laufen zwischen diesen und die einzelnen Bänder der ersten Bandleitung 4. Der jeweils erfasste Bogen wird dadurch in Laufrichtung des Sammelzylinders 3 weiterbefördert; er läuft mit dem Sammelzylinder 3 um bis er die Einlaufstelle 42 wieder erreicht hat. Hier trifft der auf dem Sammelzylinder 3 gesammelte Bogen auf den folgenden nachkommenden Bogen. Sofern die Finger 41 der Weiche noch so stehen wie im Falle des Einlaufens des ersten Bogens, legt sich der zweite Bogen auf die Aussenseite des bereits gesammelten ersten Bogens und läuft in die erste Bandleitung 4 ebenfalls ein. Somit liegen zwei Bogen auf dem Umfang des Sammelzylinders 3 übereinander. Beide Bogen laufen mit dem Sammelzylinder 3 um bis die Einlaufstelle 42 erreicht ist. Hier kann ein weiterer oder können mehrere weitere Bogen in gleicher Weise auf dem Sammelzylinder aufgenommen werden. Meistens werden auf dem Sammelzylinder 3 vier Bogen gesammelt, die an der Einlaufstelle 42 mit einem nachfolgenden fünften Bogen vereinigt werden. Ehe diese fünf Bogen in die Bandleitung 4 einlaufen können, werden die Finger 41 der Weiche geschwenkt und tauchen in entsprechende auf dem Umfang des Sammelzylinders 3 angeordnete ringförmige Nuten ein, was voraussetzt, dass die auf dem Sammelzylinder 3 gesammelten Bogen nicht den gesamten Umfang dieses Sammelzylinders ausfüllen. Dadurch, dass die Finger 41 in die Nuten des Sammelzylinders 3 eintauchen, werden die Finger 41 in eine in Fig. 1 waagerechte Lage verschwenkt, wodurch das aus nunmehr fünf Bogen bestehende Bogenpaket zwischen die vierte Bandleitung 20 und die siebente Bandleitung 34 einlaufen kann. Durch den diskontinuierlichen Antrieb dieser Bänder sowie der fünften Bandleitung 26 wird das aus den fünf Bogen bestehende Bogenpaket verlangsamt und an dem Umkehrzylinder 33 vorbei einer Ablagestelle 43 zugeführt. Diese kann in bekannter Weise aus einem Kasten, aus einer Palette o.ä. bestehen.

Auf ein entsprechendes durch Hand zu betätigendes Kommando kann eine Weiche 44 mittels eines Druckmittelzylinders 45 verschwenkt werden. Auf diese Weise ist es möglich, das Paket der gesammelten Bogen aus dem durch die vierte Bandleitung 20 und die siebente Bandleitung 34 gegebenen Halt zu lösen und das Paket zwischen die siebente Bandleitung 34 und die sechste Bandleitung 30 einzuführen. Dadurch kann das Paket der abzulegenden Bogen einer zweiten Ablageeinrichtung 46 zugeführt werden. Dies ist z. B. dann vorteilhaft, wenn sich an der Ablagestelle 43 ein genügend grosser Stapel gebildet hat und der Kasten oder die Palette, welche(r) diesen Stapel aufnimmt, ausgewechselt werden muss. Ferner können die Bogenpakete an die zweite Ablagestelle 46 befördert werden, wenn der laufenden Produktion Pobeexemplare entnommen werden sollen.

Alle die Bänder der verschiedenen Bandleitungen umlenkenden Walzen sind drehbar und alle die drehbar gelagerte Scheiben unterstützenden Traversen sind fest in dem die Seitenwände 1 und 2 enthaltenden Gestell der Maschine gelagert.

Der Sammelzylinder 3 ist über Lager 47 in der Seitenwand 1 und über Lager 48 in der Seitenwand 2 des Maschinengestelles drehbar gelagert. Ferner ist der Sammelzylinder 3 mit einem Zahnrad 49 fest verbunden, welches kontinuierlich vom Hauptantrieb der Gesamtmaschine her angetrieben ist.

Das Zahnrad 49 steht mit einem Zahnrad 50, welches ein Mehrfaches der Zähnezahl aufweist als das Zahnrad 49, in Eingriff. Die Zähnezahl des Zahnrades 50 ist beispielsweise fünfmal so gross wie die Zähnezahl des Zahnrades 49, wenn fünf Bogen gemeinsam abgelegt werden sollen. Das Zahnrad 50 ist über Lager 51 und 52 seinerseits drehbar in der Seitenwand 1 gelagert. Daneben ist das Zahrad 50 mit einem Kurbelzapfen 53 versehen, in welchen eine Koppel 54 drehbar gelagert eingreift.

Die Bandwalze 21 ist über Lager 55 in der Seitenwand 1 und über Lager 56 in der Seitenwand 2 mittels der Lagerzapfen 57 und 58 drehbar gelagert.

Auf dem Lagerzapfen 57 stützt sich die aus Fertigungsgründen aus zwei Teilen bestehende Aussensonne 60 eines ersten Planetengetriebes unter Zwischenschaltung eines Lagers 59 drehbar ab. Die Aussensonne 60 ist mit einer Innenverzahnung 61 und mit einer Aussenverzahnung 62 versehen. Die Aussenverzahnung 62 wirkt mit den Zähnen des Zahnrades 50 zusammen und steht mit diesen in Eingriff.

In der Seitenwand 1 ist eine Welle 63 derart gelagert, dass ein mit ihr fest verbundenes Zahnrad 64 mit dem Zahnrad 50 in Wirkverbindung steht. Mit der Welle 63 ist ein weiteres Zahnrad 65 ebenfalls fest verbunden. Das Zahrad 65 steht mit der aus zwei Teilen bestehenden Aussensonne 66 eines zweiten Planetengetriebes mittels einer Aussenverzahnung 67 in Eingriff. Die Innenverzahnung 68 der Aussensonne 66 kämmt mit der Verzahnung 69 mindestens eines Planetenrades 70 des zweiten Planetengetriebes. Anstelle dieses einen Planetenrades können aber auch mehrere, beispielsweise zwei oder drei vorgesehen sein. Das Planetenrad bzw. die Planetenräder 70 des zweiten Planetengetriebes sind mittels Lager 71 drehbar auf dem Steg 72 des zweiten Planetengetriebes gelagert. Dieser Steg 72 ist mit dem Steg 73 des ersten Planetengetriebes verbunden und besteht vorzugsweise, wie bei dem das aus den beiden Planetengetrieben bestehende Verbundgetriebe darstellende Ausführungsbeispiel, aus ein und demselben Machinenteil. An dem Steg 73 sind ferner das oder die Planetenräder 75 des ersten Planetengetriebes unter Zwischenschaltung von Lagern 74 drehbar gelagert.

Der Steg 72/73 des aus dem ersten und dem zweiten Planetengetriebe bestehenden Verbundgetriebes ist mittels Zapfen 76 mit der Koppel 54 verbunden.

Die Innensonne des ersten Planetengetriebes wird durch das Zahnrad 77 repräsentiert, welches mit dem Lagerzapfen 57 der Walze 21 fest verbunden ist. Die Innensonne 78 des zweiten Planetengetriebes ist mit einer Schwungscheibe 79 fest verbunden. Dadurch, dass das Ablagesystem umlaufende Bandleitungen enthält, sind die ungleichförmig umlaufenden Massen relativ gering. Damit kann auch die Schwungscheibe 79 relativ klein gehalten werden.

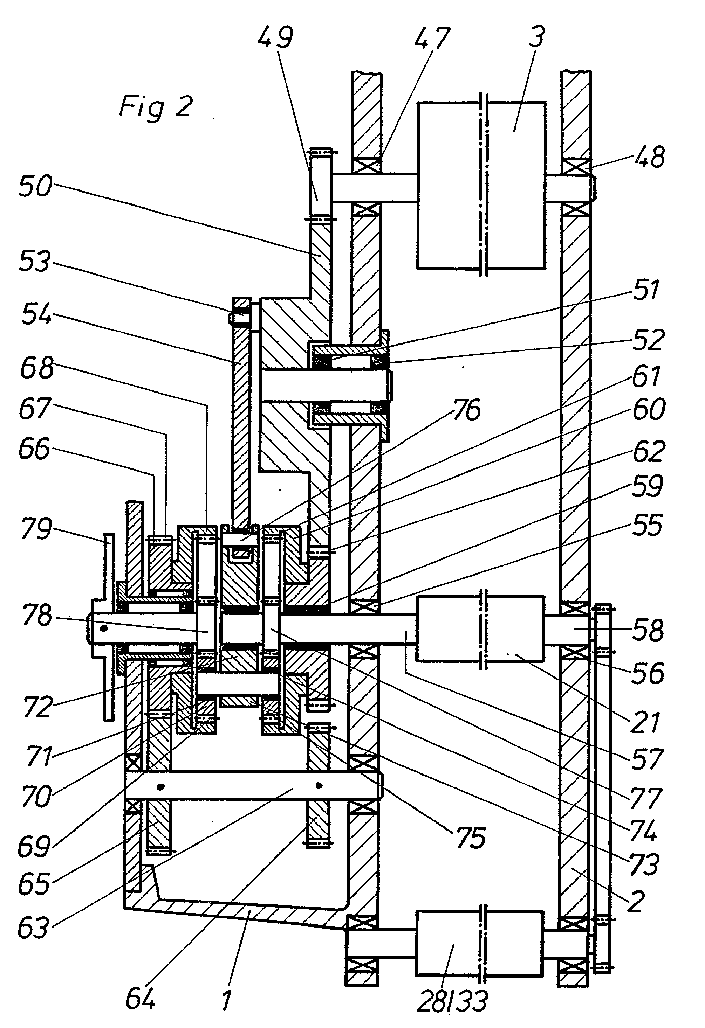

Aufgrund der Tatsache, dass die Aussensonne 60 des ersten Planetengetriebes mit dem Zahnrad 50 direkt in Eingriff, die Aussensonne 66 des zweiten Planetengetriebes jedoch unter Zwischenschaltung der Zahnräder 64 und 65 mit dem Zahnrad 50 indirekt in Eingriff stehen, läuft die Aussensonne 66 des zweiten Planetengetriebes gegensinnig zu der Drehrichtung der Aussensonne 60 des ersten Planetengetriebes um. Aufgrund der weiteren Tatsache, dass der Kurbelzapfen 53 mit dem Zahnrad 50 fest verbunden und die Koppel 54 mit dem Kurbelzapfen 53 und mit dem Steg 72/73 der beiden Planetengetriebe verbunden ist, erhält der Steg einen diskontinuierlichen, durch den Umlauf des Kurbelzapfens 53 hervorgerufenen ungleichförmigen Antrieb. Ferner geht aus der Betrachtung der Fig. 2 hervor, dass das Getriebe, welches dem Antrieb der Bänder dient, sehr kompakt ist und nur wenige Hohlräume aufweist.

Dadurch, dass die Aussensonnen 60 und 66 der beiden Planetengetriebe gegenläufig umlaufen, die Stege 72 und 73 beider Planetengetriebe miteinander verbunden sind oder gar aus dem gleichen Bauteil bestehen und die Übersetzungsverhältnisse entsprechend gewählt sind, laufen auch die Innensonnen 77 und 78 zueinander gegenläufig um. Das bedeutet, dass die Schwungscheibe 79 beschleunigt wird, wenn die Walze 21 verzögert und dass die Schwungscheibe 79 verzögert, wenn die Walze 21 beschleunigt wird. Es ergibt sich somit eine starke Dämpfung der durch die Beschleunigungen und Verzögerungen hervorgerufenen Massenkräfte. Diese Kräfte werden zudem dadurch gering gehalten, dass Bänder anstelle von Ketten verwendet wurden.

## Patentansprüche

1. Einrichtung zum Antrieb der mit einer Bahnen oder Bogen (40) be- oder verarbeitenden Maschine verbundenen Ablegeeinrichtung für die be- oder verarbeiteten, aus Papier, Folie, Geweben, Metallen o. dgl. bestehenden Bogen (40), mit einem mit einem gleichförmigen (50) und einem ungleichförmigen Antrieb (53, 54) versehenen Planetengetriebe bestehend aus Aussensonne (60), Steg (73), Planetrad (75) und Innensonne (77), wobei der gleichförmige Antrieb (50) mit der Aussensonne (60), der ungleichförmige Antrieb (53, 54) mit dem Steg (73) verbunden und der ungleichförmige Abtrieb bestehend aus der Innensonne (77) mit einer die abzulegenden Bogen ergreifenden und diese verlangsamenden Ablegeeinrichtung (20, 26, 30, 34) verbunden ist, gekennzeichnet durch ein aus Bandleitung (20, 26, 30, 34) bestehendes Leit- und Ablagesystem für die Bogen (40) und ein aus zwei Planetengetrieben (60, 77, 75, 66, 70, 78) bestehendes Verbundgetriebe, bei dem die Stege (72, 73) der beiden Planetengetriebe (60, 75, 77, 66, 70, 78) miteinander verbunden sind, wobei die Aussensonne (66) des zweiten Planetengetriebes zur Aussensonne (60) des ersten Planetengetriebes (60, 75, 77) gegensinnig umläuft und die Innensonne (78) des zweiten Planetengetriebes (66, 70, 77) mit einer Schwungscheibe (79) verbunden ist.

2. Einrichtung nach Anspruch 1, dadurch gekennzeichnet, dass die Stege (72, 73) der beiden Planetengetriebe (60, 75, 77, 6, 70, 78) aus einem beiden Planetengetrieben (60, 75, 77, 66, 70, 78) gemeinsamen Bauteil bestehen.

## Claims

1. Device for driving a delivery unit connected to a machine processing webs or sheets (40) of paper, film, fabrics, metal or the like, with a planetary gear train consisting of external sun gear (60), cross piece (73), planetary gear (75) and internal sun gear (77) and equipped with a uniform (50) and a non-uniform (53, 54) drive, the uniform drive (50) being connected with the external sun gear (60), the non-uniform drive (53, 54) being connected with the cross piece (73), and the non-uniform output consisting of the internal sun gear being connected to a delivery (20, 26, 30, 34) that seizes the sheets to be delivered and slows their speed down, comprising a sheet conveying and discharge system consisting of tape guides (20, 26, 30, 34) and a compound gearing comprising to planetary gear trains (60, 77, 75, 66, 70, 78), the cross pieces (72, 73) of the two planetary gear trains (60, 75, 77, 66, 70, 78) being interconnected, the external sun gear (66) of the second planetary gear train counter-rotating with respect to the external sun gear (60) of the first planetary gear train (60, 75, 77) and the internal sun gear (78) of the second planetary gear train (66, 70, 77) being connected to a flywheel (79).

2.Device as per claim 1, comprising the cross pieces (72, 73) of the two planetary gear trains (60, 75, 77, 66, 70, 78) consisting of an element common to both the planetary gear trains (60, 75, 77, 66, 70, 78).

## Revendications

1. Mécanisme pour etraîner un appareil de délivrance de feuilles (40) coordonné à une machine assurant le façonnage ou le traitement de bandes ou de feuilles (40) en papier, tissus, métal, etc....., comportant un engrenage planétaire, constitué par une roue solaire extérieur (60), une tige (73), une roue planétaire (75) et une roue solaire intérieure (77), qui est équipé d'un mécanisme d'entraînement à rapport constant (50) et d'un mécanisme d'entraînement à rapport variable (53, 54) et dans lequel le mécanisme d'entraînement à rapport constant (50) est relié à la roue solaire extérieure (60), alors que le mécanisme d'entraînement à rapport variable (53, 54) est relié à la tige (73) et qu'un mécanisme entraîné à rapport variable, constitué par la roue solaire intérieure (77) est relié au dispositif collecteur (20, 26, 30, 34) qui saisit les feuilles à collecter en provoquant leur ralentissement, caractérisé par un dispositif de guidage et de stockage des feuilles (40) comportant des voies de guidage (20, 26, 30, 34) et par un ensemble d'engrenages constitué par deux engrenages planétaires (60, 77, 75, 66, 70, 78) dont les tiges (72, 73) de chacun de ces engrenages planétaires (60, 77, 75, 66, 70, 78) sont reliées entre elles, alors que la roue solaire extérieure (66) du deuxième engrenage planétaire tourne dans le sens contraire par rapport à la roue solaire (60) du premier engrenage planétaire (60, 75, 77) et que la roue solaire intérieure (78) du deuxième engrenage planétaire (66, 70, 77) est reliée à un volant à disque (79).

2. Mécanisme selon la revendication 1, caractérisé en ce que les tiges (72, 73) des deux engrenages planétaires (60, 75, 77, 66, 70, 78) constituent un élément composant commun à ces deux engrenages planétaires (60, 75, 77, 66, 70, 78).

Fig 1

0075057

Fig 2

0075057

Fig 3